# EUROPEAN PATENT APPLICATION

(11) **EP 1 985 890 A2**
(43) Date of publication of application: **29.10.2008**
(21) Application number: 08007963.5
(22) Date of filing: 24.04.2008
(51) Int. Cl.: F16G 5/18

(54) **Power transmitting chain and power transmitting apparatus**

(30) Priority: 25.04.2007 JP 2007115019
(71) Applicant: JTEKT Corporation, Osaka-shi Osaka 542-8502 (JP)
(72) Inventor: Miura, Yoshihisa c/o JTEKT Corporation, 542-8502 Osaka (JP)
(74) Representative: Hager, Thomas Johannes

(57) **Abstract**

Taper portions (33a,36a) diameters of which are increased in outer directions in longitudinal directions of a pin (17) and an interpiece (15) are formed at inner peripheral faces of a pin fixing portion (18) and an interpiece fixing portion (17) of links at least on outermost sides in the links (11) arranged in a width direction of a chain such that deformations of the pin (17) and the interpiece (15) in being operated with a load become bending deformations in a direction in which the link (11) is not drawn from the pin and the interpiece.

## Description

### BACKGROUND OF THE INVENTION

### 1. Field of the Invention

The present invention relates to a power transmitting chain, further in details, relates to a power transmitting chain and a power transmitting apparatus preferable for a continuously variable transmission (CVT) of a vehicle such as an automobile or the like.

### 2. Related Art

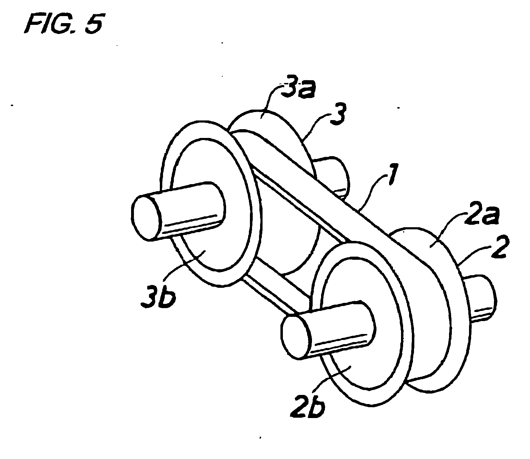

As shown by Fig.5, there is known a continuously variable transmission for an automobile constituted by a drive pulley (2) including a fixed sheave (2a) and a movable sheave (2b) and provided on a side of an engine, a driven pulley (3) including a fixed sheave (3b) and a movable sheave (3a) and provided on a side of a drive wheel, and an endless power transmitting chain (1) extended therebetween, by making the movable sheaves (2b) and (3a) proximate to and remote from the fixed sheaves (2a) and (3b) by a hydraulic actuator, the chain (1) is clamped by a hydraulic pressure, a contact load is produced between the pulleys (2) and (3) and the chain (1) by a clamp force thereof, and a torque is transmitted by a friction force of the contact portion.

JP-A-2005-233275 proposes a power transmitting chain including a plurality of links having front and rear insertion through holes to be inserted with pins, and a plurality of first pins and a plurality of second pins for rotatably connecting the links in a length direction such that the front insertion through hole of one link corresponds to the rear insertion through hole of other link, and the links are bendably connected in the length direction by bringing the first pin fixed to the front insertion through hole of one of the links and fitted movably to the rear insertion through hole of another of the links, and the second pin fitted movably to the front inserting potion of said one of the links and fixed to the rear insertion through hole of another of the links into rolling contact with each other relatively to move.

According to the power transmitting chain of JP-A-2005-233275, intervals among the plurality of links arranged in the chain width direction are set to a predetermined value. Although the interval between the links is ensured in an initial state by press-fitting to fix the pins to the link, there is a possibility of loosening the fixing by press-fitting by an aging change of a shape of the link and repeating elastic deformation by an external force, in this case, there is a possibility of increasing noise and vibration by increasing a clearance between the links.

### SUMMARY OF THE INVENTION

It is an obj ect of the invention to provide a power transmitting chain and a power transmitting apparatus such that intervals among the plurality of links arranged in a width direction of a chain are changed in a direction of being advantageous for reducing noise and vibration when the pin and the link are loosened from being fixed.

According to the invention, there is provided a power transmitting chain including a plurality of links having front and rear insertion through holes to be inserted with pins, and a plurality of first pins and a plurality of second pins arranged in a front and rear direction for connecting the links arranged in a width direction of a chain such that the front insertion through hole of one of the links corresponds to the rear insertion through hole of another of the links, wherein the links are bendably counnected in a length direction by bringing the first pin and the second pin into rolling contact with each other relatively to move, one of the first pin and the second pin is fixed to a pin fixing portion provided at a front side portion of the front insertion through hole of said one of the links and fitted movably to a pin movable portion provided at a front side portion of the rear insertion through hole of said another of the links, the other thereof is movably fitted to a pin movable portion provided on a rear side portion of the front insertion through hole of said one of the links and fixed to a pin fixing portion provided at a rear side portion of the rear insertion through hole of said another of the links, and wherein an inner peripheral face of the pin fixing portion of the link of at least on an outermost side of the links arranged in the chain width direction is formed with a taper portion in which a diameter thereof is increased to an outer direction in a longitudinal direction of the pin and a deformation of the pin in being operated with a load is constituted by a bending deformation in a direction in which the link is not drawn from the pin.

Although the pin is fixed to the pin fixing portion by fitting to fix an inner edge of the fixing portion and an outer peripheral face of the pin by mechanical press-fitting, in place thereof, the fixing may be carried out by shrink fitting or chill fitting. It is preferable to fit to fix the pin to the pin fixing portion at edges (upper and lower edges) of portions orthogonal to a length direction of the pin fixing portion. By press-fitting to fix the pin to the pin fixing portion at the upper and lower edges, each of the pin fixing portions includes upper and lower press-fitting portions and a non-press-fitting portion disposed between the upper press-fitting portion and the lower press-fitting portion and brought into contact with the pin, and at least a portion of the non-press-fitting portion is provided with a taper face. The taper face is formed such that a direction of the taper is set by a reference in which a deformation of the pin in being operated with a load becomes a bending deformation in a direction in which the link is not drawn from the pin and a diameter thereof is increased to an outer side in a longitudinal direction of the pin.

The taper-portions may be formed at all of the links including links on outermost sides, or may be provided at portions of the links of only the links on the outermost sides and the links on inner sides thereof. In either of the cases, the taper portions are formed so as to be symmetrical with each other with respect to a center in the longitudinal direction of the pin in corresponding ones thereof of two of the links on the outermost sides or the like.

By press-fitting to fix the respective pins to the pin fixing portions of the corresponding links, the links are positioned such that intervals among the links become a predetermined value. When press-fitting is loosened by an aging change of the shape of the link or repeating an elastic deformation by an external force, there is a possibility of increasing clearances .among the links and when the, clearance is increased, the clearance constitutes a. factor of increasing noise. By forming the taper portion increasing the diameter in the outer direction in the longitudinal direction of the pin at the link, a deformation of the pin when exerted with the load results in a bent shape along the taper portion, as a result, the link is exerted with the load directed to the center in the longitudinal direction of the pin, and the link when the press-fitting is loosened is arranged such that a clearance of the links contiguous to each other is reduced. Thereby, a dumping effect against a chord vibration or the like is achieved by shortening the clearances among the links, further, the link can be prevented from being drawn from the pin.

According to the chain, for example, one link unit is constituted by arranging three link rows, each of which is constituted by a plurality of the links having the same phase in the width direction, in an advancing direction (front and rear direction), a plurality of the link units, each of which is constituted by three link rows, are connected in the advancing direction. Numbers of sheets of the links included in the respective link rows may differ from each other.

In the power transmitting chain according to the invention, at least one of the first pin and the second pin is brought into contact with a pulley and power is transmitted by a friction force thereof. In the chain in which either of the pins is brought into contact with the pulley, either one of the first pin and the second pin is constituted by a pin on a side of being brought into contact with.the pulley when the chain is used in a continuously variable transmission (hereinafter, referred to as "first pin" or "pin") and other thereof is constituted by a pin on a side of not brought into contact with the pulley (referred to as interpiece or strip, hereinafter, referred to as "second pin" or "interpiece").

The link is made of for example, spring steel or carbon tool steel. A material of the link is not limited to spring steel or carbon tool steel but may naturally be other steel of bearing steel or the like. According to the link, the front and rear insertion through holes may be constituted by through holes independent from each other (link having column), or the front and rear insertion through holes may be constituted by one through hole (link without column). As a material of the pin, pertinent steel of bearing steel or the like is used.

According to the first pin and the second pin, for example, a contact face of either one thereof is constituted by a flat face, and a contact face of other thereof is formed by an involute curved face capable of being brought into rolling contact therewith relatively to move. Further, the respective contact faces of the first pin and the second pin may be formed by required curved faces :

Further, although in the specification, one end side in the length direction of the link is constituted by a front side and other end side thereof is constituted by a rear side, the front and rear sides are for convenience and do not signify that the length direction of the link always coincide with the front and rear direction.

According to the power transmitting chain, it is preferable that either one pin (interpiece) is made to be shorter than the other pin (pin), an end face of the pin on the long side is brought into contact with a conical sheave face of the pulley of the continuously variable transmission and power is transmitted by a friction force by the contact. Each of the pulleys is constituted by a fixed sheave having a conical sheave face and a movable sheave having a conical sheave face opposed to the sheave face of the fixed sheave, a chain is squeezed between the sheave faces of the two sheaves, the movable sheave is moved by a hydraulic actuator, thereby, a distance between the sheave faces of the continuously variable transmission, and therefore, a radius of winding the chain is changed and continuously variable transmission can be carried out by a smooth movement.

A power transmitting apparatus according to the invention includes a first pulley having a sheave face in a shape of a conical face, a second pulley having a sheave face in a shape of a conical face, and a power transmitting chain extended between the first and the second pulleys, and the power transmitting chain is constituted as described above.

The power transmitting apparatus is preferable for being used as a continuously variable transmission of a vehicle of an automobile or the like.

According to the power transmitting chain of the invention, the inner peripheral face of the pin fixing portion of the link at least on the outermost side of the links arranged in the chain width direction is formed with the taper portion a diameter of which is increased to the outer side in the longitudinal direction of the pin, and therefore, the deformation of the pin in being.operated with a load becomes a bending deformation in a direction in which the link is not drawn from the pin, the clearance between the links is shortened, a dumping effect is achieved against a chord vibration or the like, which constitutes a change advantageous in reducing noise and vibration. Further, the link can also be prevented from being drawn from the pin.

### BRIEF DESCRIPTION OF THE DRAWINGS

Fig.1 is a plan view showing a portion of an embodiment of a power transmitting chain according to the invention.
Fig.2 is a side view enlarging a link.
Fig.3 is a plan sectional view schematically showing an essential portion of a power transmitting chain according to the invention.
Fig. 4 is a front view showing a state of attaching the power transmitting chain to a pulley.
Fig. 5 is a perspective view showing a continuously variable transmission.

### DETAILED DESCRIPTION OF THE PREFERRED EMBODIMENTS

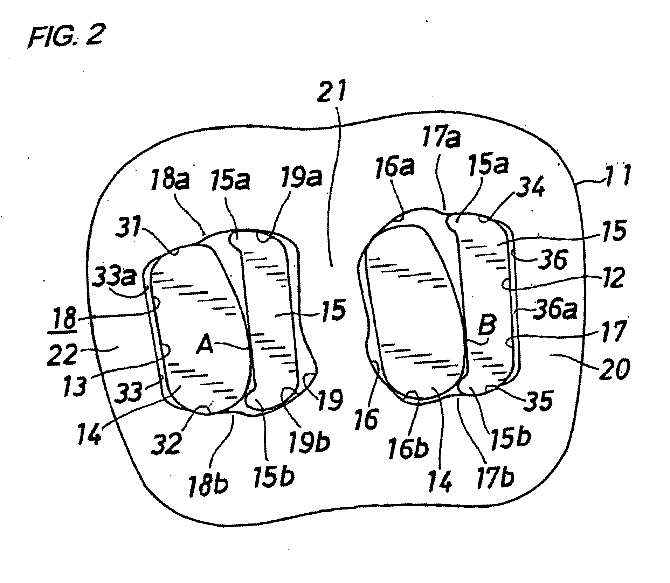

An embodiment of the invention will be explained in reference to the drawings as follows. In the following explanation, upper and lower refers to upper and lower of Fig.2.

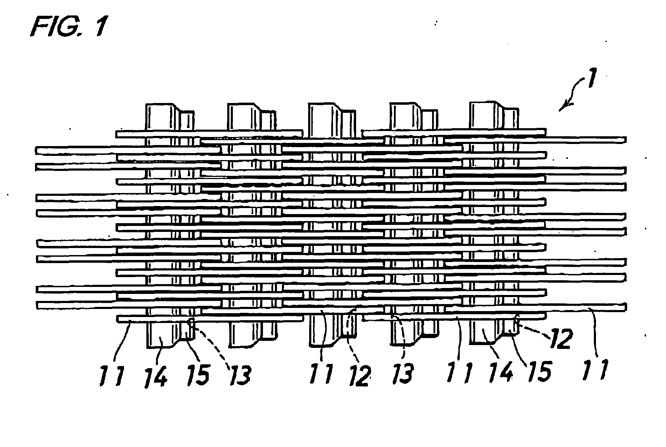

Fig.1 shows a portion of a power transmitting chain according to the invention, and a power transmitting chain (1) includes a plurality of links (11) having front and rear insertion through holes (12) and (13) provided in a length direction of the chain at predetermined intervals, and pluralities of pins (first pins) (14) and interpieces (second pins) (15) for connecting the links (11) arranged in a width direction of the chain rotatably in a length direction. The interpiece (15) is made to be shorter than the pin (14) and both thereof are made to be opposed to each other in a state of arranging the interpiece (15) on a front side and arranging the pin (14) on a rear side.

The chain (1) is formed by constituting one link unit by arranging three link rows each constituted by a plurality of links having the same phase in a width direction in an advancing direction (front and rear direction) and connecting a plurality of the link units, each of which is constituted by three link rows. According to the embodiment, the one link unit is constituted by one link row having nine of sheets of the links and two link rows each having eight sheets of the links.

As shown by Fig. 2, the pin (14) is made to be wider than the interpiece (15) in a front and rear direction, upper and lower edge portions of the interpiece .(15) are provided with projected edge portions (15a) and (15b) extended to a side of the pin (14). A column portion (21) is interposed between the front insertion through hole (12) and the rear insertion through hole (13) of the link (11), the front insertion through hole (12) of the link (11) is constituted by a pin movable portion (16) movably fitted with the pin (14) and an interpiece fixing portion (17) fixed with the interpiece (15), and the rear insertion through hole (13) is constituted by a.pin fixing portion (18) fixed with the pin (14) and an interpiece movable portion (19) movably fitted with the interpiece (15).

In connecting the links (11) arranged in the chain width direction, the links (11) are overlapped such that the front insertion through hole (12) of one of the links (11) corresponds to the rear insertion through hole (13) of another of the links (11), the pin (14) is fixed to the rear insertion through hole (13) of the one link (11) and movably fitted to the rear insertion through hole (13) of the other link (11), and the interpiece (15) is movably fitted to the rear insertion through hole (13) of the one link (11) and fixed to the front insertion through hole (12) of the other link (11). Further, by bringing the pin (14) and the interpiece (15) into rolling contact with each other relatively to move, the links (11) are bendably connected in a length direction (front and rear direction).

The pin (14) and the interpiece (15) are fixed to the interpiece fixing portion (17) and the pin fixing portion (18) of the link (11) by press-fitting, and the press-fitting is carried out between upper and lower edge portions of the pin (14) and the interpiece (15) and upper and lower edge portions of the pin fixing portion (18) and the interpiece fixing portion (17). Thereby, as shown by Fig. 2, the pin fixing portion (18) is formed with upper and lower press-fitting portions (31) and (32) and a nonpress-fitting portion (33) disposed between the upper press-fitting portion (31) and the lower press-fitting portion (32) and brought into contact with a rear face of the pin (14), further, the interpiece fixing portion (17) of the link (11) is formed with upper and lower press-fitting portions (34) and (35) and a nonpress-fitting portion (36) disposed between the upper press-fitting portion (34) and the lower press-fitting portion (35) and brought into contact with a front face of the interpiece (15).

With regard to predetermined ones of the links (11), for example, with regard to outermost ones of the links (11) of the links (11) arranged in the chain width direction, the nonpress-fitting portions (33) and (36) of the pin fixing portion (18) and the interpiece fixing portion (17) are formed with taper portions (33a) and (36a) for facilitating to bend the pin (17) and the interpiece (15). As a result, in the predetermined links (11), at the respective press-fitting portions (31), (32), (34) and (35), the pin (14) and the interpiece (15) are brought into face contact with inner peripheral pieces of the pin fixing portion (18) and the interpiece fixing portion (17), and at the respective nonpress-fittingportions (33) and (34), the pin (14) and the interpiece (15) are brought contact with line contact with the inner peripheral faces of the pin fixing portion (18) and the inerpiece fixing portion (17).

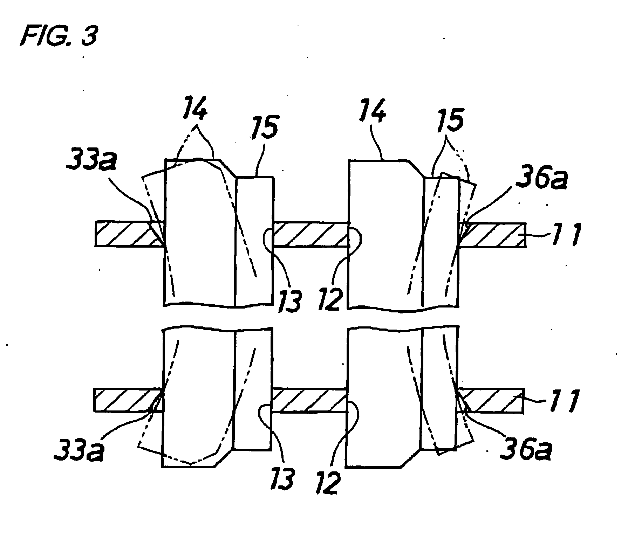

As shown by Fig.3, the taper portions (33a) and (36a) formed at the respective nonpress-fittingportions (33) and (36) are formed such that diameters thereof become large in outer directions in longitudinal directions of the pin (14) and the interpiece (15). Therefore, the interpiece (15) fixed to the front side of the link (11) is facilitated to be constituted by a convex bent shape to the rear side as shown by chain double-dashed lines and the pin (14) fixed to the rear side of the link (11) is facilitated to be constituted by a convex bent shape to the front side as shown by chain double-dashed lines.

Boundary portions of the pin fixing portion (18) and the interpiece movable portion (19) are provided with upper and lower convex circular arc shape holding portions (18a) and (18b) respectively continuous to upper and lower concave circular arc shape guide portions (19a) and (19b) of the interpiece movable portion (19) and holding the pin (14) fixed to the pin fixing portion (18). Similarly, boundary portions of the interpiece fixing portion (17) and the pin movable portion (16) are provided with upper and lower convex circular arc shape holding portions (17a) and (17b) respectively continuous to upper and lower concave circular arc shape guide portions (16a) and (16b) of the pin movable portion (16) and holding the interpiece (15) fixed to the interpiece fixing portion (17)

In Fig.1, the plurality of links (11) arranged in the chain width direction are arranged such that a clearance of about 0.01 through 0. 03 mm is formed between the links (11) contiguous to each other. Although during a time period of ensuring to fix the pin (14) and the interpiece (15) and the link (11), also the clearances among the links (11) contiguous to each other in the width direction are maintained constant, and a noise characteristic remains unchanged, there is a possibility of loosening fixing of the pin (14) and the' interpiece (15) and the link (11) by an aging change, in this case, when the clearance becomes large, noise and vibration are increased. In contrast thereto, as described above, the taper portions (33a) and (36a) formed at the respective nonpress-fitting portions (33) and (36) are formed such that diameters thereof become large in the outer directions of the longitudinal directions of the pin (14) and the interpiece (15), and therefore, the interpiece (15) fixed to the front side of the link (11) is facilitated to be constituted by the convex bent shape to the rear side, the pin (14) fixed to the rear side of the link (11) is facilitated to be constituted by the convex bent shape to the front side, thereby, the link (11) receives loads directed to centers in the longitudinal directions of the pin (14) and the interpiece (15), and when press-fitting is loosened, the links (11) arranged in the chain width direction are arranged such that the clearances of the links (11) contiguous to each other become small.

A locus of a position at which the pin (14) and the interpiece (15) are brought into contact with each other with reference to the pin (14) is constituted by an involute of a circle, according to the embodiment, a contact face of the pin (14) includes an involute shape having a radius Rb and a center M in a cross section thereof, and a contact face of the interpiece (15) is constituted by a flat face (linear line in a sectional shape). Therefore, when the links (11) are shifted from a linear portion to a curved.portion or from the curved portion to the linear portion of the chain (1), in the front insertion through hole (12), the pin (14) is moved relative to the interpiece (15) in the fixed state within the pin movable portion (16) such that a contact face thereof is brought into rolling contact (including more or less of sliding contact) with the contact face of the interpiece (15), and in the rear insertion through hole (13), the interpiece (15) is moved relative to the pin (15) in the fixed state within the interpiece movable portion (19) such that the contact face is brought into rolling contact (including more or less sliding contact) with the contact face of the pin (14). Further, portions of Fig. 2 designated by notations A and B are lines (points in the section) at which the pin (14) and the interpiece (15) are brought into contact with each other at the linear portion of the chain (1) and a distance between A and B is a pitch.

The power transmitting chain (1) is fabricated by holding necessary numbers of the pins (14) and the interpieces (15) above a base in a vertical shape, thereafter, press-fitting the links (11) one by one or several sheets thereof at once. The press-fitting is carried out between the upper and lower edge portions of the pin (14) and the interpiece (15) and the upper and lower edge portions of the pin fixing portion (18) and the interpiece fixing portion (17), and a margin of the press-fitting is constituted by 0.005 mm through 0.1 mm. The chain assembled in this way is exerted with a tension (pretension).

Although in the above-described power transmitting chain (1), a polygonal vibration is produced by repeating to move the pins in an up and down direction, which constitutes a factor of noise, by bringing the pin (14) and the interpiece (15) into rolling contact with each other relatively to move and constituting the locus of the position of bringing the pin (14) and the interpiece (15) into contact with each other by constituting the reference by the pin (14) by the involute of the circle, in comparison with the case in which both of the contact faces of the pin and the interpiece are constituted by circular arc faces, vibration can be reduced and noise can be reduced. Further, with regard to a vibration produced when clearances among the links (11) arranged in the chain width direction are large, the links (11) are exerted from the pin (14) and the interpiece (15) with loads directed to centers in the longitudinal directions of the pin (14) and the interpiece (15), thereby, the links (11) arranged in the chain width direction in loosening the press-fitting are arranged such that the clearances among the links (11) contiguous to each other become small, a dumping effect is achieved against a chord vibration or the like, and noisy sound in rapid acceleration and deceleration can be reduced. Further, the links (11) are exerted with rows directed to centers in the longitudinal directions of the pin (14) and the interpiece (15), thereby, the links (11) are not drawn from the pins (14) and the interpieces (15).

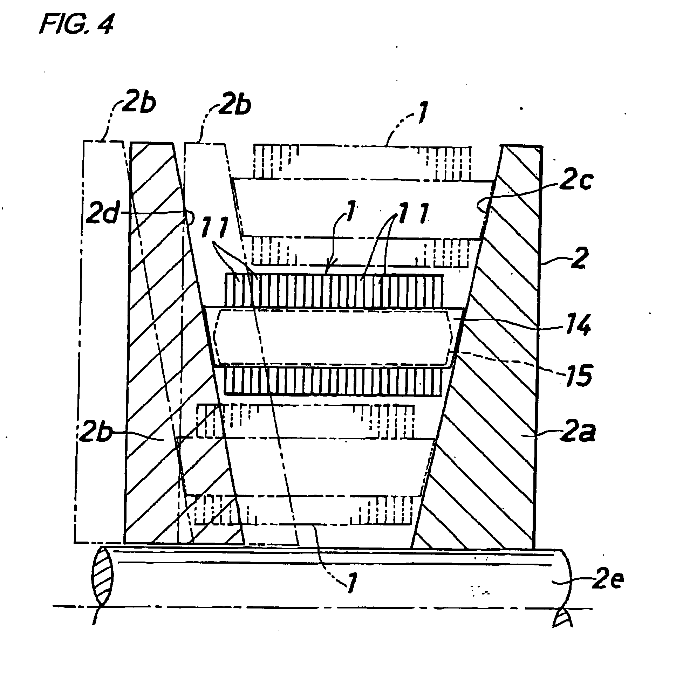

The power transmitting chain is used in CVT shown in Fig.5, at this occasion, as shown by Fig.4, end faces of the pin (14) are brought into contact with conical sheave faces (2b) and (2d) of the pulley (2) in a state in which end faces of the interpiece (15) are not brought into contact with respective conical sheave faces (2c) and (2d) of the fixed sheave (2a) and the movable sheave (2b) of the pulley (2) having a pulley shaft (2e), and power is transmitted by a friction force by the contact. As described above, the pin (14) and the interpiece (15) are brought into rolling contact with each other by being guided by the respective movable portions (16) and (19) and therefore, the pin (14) is hardly rotated relative to the sheave faces (2c) and (2d) of the pulley (2), friction loss is reduced, and a high power transmitting rate is ensured.

## Claims

1. A power transmitting chain comprising:
a plurality of links having front and rear insertion through holes to be inserted with pins, and
a plurality of first pins and a plurality of second pins arranged in a front and rear direction for connecting the links arranged in a width direction of a chain such that the front insertion through hole of one of the links corresponds to the rear insertion through hole of another of the links,
wherein the links are bendably counnected in a length direction by bringing the first pin and the second pin into rolling contact with each other relatively to move, one of the first pin and the second pin is fixed to a pin fixing portion provided at a front side portion of the front insertion through hole of one of the links and fitted movably to a pin movable portion provided at a front side portion of the rear insertion through hole of said another of the links, the other thereof is movably fitted to a pin movable portion provided on a rear side portion of the front insertion through hole of said one of the links and fixed to a pin fixing portion provided at a rear side portion of the rear insertion through hole of said another of the links; and
wherein an inner peripheral face of the pin fixing portion of the link of at least on an outermost side of the links arranged in the chain width direction is formed with a taper portion in which a diameter thereof is increased to an outer direction in a longitudinal direction of the pin and a deformation of the pin in being operated with a load is constituted by a bending deformation in a direction in which the link is not drawn from the pin.

2. A power transmitting chain according to Claim 1, wherein the taper portions are formed so as to be symmetrical with each other with respect to a center in the longitudinal direction of the pin in two of the links that are symmetrical with each other with respect to the center.

3. A power transmitting apparatus including a first pulley having a sheave face in a shape of a conical face, a second pulley having a sheave face in a shape of a conical face, and a power transmitting chain extended between the first and the second pulleys, wherein the power transmitting chain is constituted by the power transmitting chain according to Claim 1.
